# EUROPÄISCHE PATENTSCHRIFT

(11) **EP 0 903 197 B1**
(45) Veröffentlichungstag und Bekanntmachung des Hinweises auf die Patenterteilung: **14.11.2001**
(21) Anmeldenummer: 98117142.4
(22) Anmeldetag: 10.09.1998
(51) Int. Cl.: B23K 37/047, B62D 65/00

(54) **Vorrichtung zum Wechseln von Spannrahmen in einer Bearbeitungsstation**
Apparatus for changing clamping frames in a machining station
Dispositif pour changer des cadres de fixations dans une station d'usinage

(30) Priorität: 24.09.1997 AT 162097
(43) Veröffentlichungstag der Anmeldung: 24.03.1999
(73) Patentinhaber: VA TECH Transport- und Montagesysteme GmbH & Co, 4031 Linz (AT)
(72) Erfinder: Kreuzgruber, Dietrich, 4060 Leonding (AT); Kreiten, Ulrich, 94124 Büchlberg (DE)
(74) Vertreter: VA TECH Patente GmbH

(56) Entgegenhaltungen:
- EP-A- 0 296 369
- EP-A- 0 642 878
- WO-A-92/19486
- DE-A- 2 810 822
- DE-A- 3 606 058

## Beschreibung

Die vorliegende Erfindung betrifft eine Vorrichtung zum Zuführen, Positionieren und Schweißen von Teilen einer Fahrzeugkarosserie in einer Bearbeitungsstation einer Fertigungsstraße, gemäß dem Oberbegriff des Anspruchs 1.

Vorrichtungen der oben genannten Art sind bekannt (siehe WO-A-92/19486) und dienen dazu, an ein und derselben Fertigungsstraße zwei unterschiedliche Karosserietypen fertigen zu können. Zu diesem Zweck müssen bei jedem Typenwechsel auch Spannrahmen gewechselt werden. Spannrahmen, die gerade nicht benötigt werden, müssen an bestimmten Stellen aufbewahrt werden.

In der EP-A-642 878 ist eine Einrichtung zum Wechseln von Spannrahmen beschrieben, bei welcher jeder Spannrahmen mit einem Fahrwerk ausgestattet ist, welches entlang einer Schiene in Fertigungsrichtung verfahrbar ist. Im Bereich der Zuführung und Positionierung von Karosserieteilen weist die Schiene zwei quer zur Fertigungsrichtung verfahrbare Abschnitte auf, mittels welchen der Spannrahmen mit seinem Fahrgestell in die Arbeitsposition verfahren werden kann. Die Spannrahmen weisen jedoch ein hohes Gewicht auf und sind mit vergleichsweise hohen Herstellungskosten verbunden.

In der DE-OS 3 606 058 werden Spannrahmen, die von der Bearbeitungsstation gerade nicht benötigt werden, an dem vorderen und hinteren Ende der Bearbeitungsstation zu beiden Seiten der Fertigungsstraße in je einem Viertelkreis am Boden aufgestellt. Ein Nachteil dieser Anordnung liegt unter anderem darin, daß zur Aufbewahrung der Spannrahmen vergleichsweise viel Platz beansprucht wird. Ferner ist die Anzahl der aufbewahrten Spannrahmen begrenzt, da in Richtung Fertigungsstraße und in Richtung quer zur Bearbeitungsstation keine Spannrahmen aufgestellt werden können, um die Zufuhr von Karosserieteilen nicht zu behindern.

Eine weitere Möglichkeit zur Aufbewahrung von Spannrahmen ist beispielsweise in der WO 92/19486 geoffenbart. Bei der darin beschriebenen Vorrichtung können 3 unterschiedliche Spannrahmen auf einem Trommelmagazin angeordnet werden, welches vor oder nach der Bearbeitungsstation angeordnet ist und je nach Bedarf den gewünschten Spannrahmen bereitstellt. Auch bei dieser Lösung entstehen durch das Trommelmagazin ein erhöhter Platzverbrauch und konstruktionsbedingt erhöhte Herstellungskosten. Überdies ist bei dem gezeigten Ausführungsbeispiel die Kapazität des Trommelmagazins auf 3 Spannrahmen begrenzt.

Bei der DE-OS 2 810 822 ist eine Einrichtung vorgesehen, bei welcher die in Richtung Fertigungsstraße ausgerichteten Spannrahmen seitlich nebeneinander angeordnet werden und über einen Paternoster-Transportmechanismus an das gegenüberliegende Ende der Fertigungsstraße transportiert werden. Bei dieser Einrichtung wird sowohl durch die Ablage der Spannrahmen als auch durch den außen um die Schweißroboter geführte Paternoster-Transportmechanismus ein erhöhter Platzverbrauch realisiert. Weiters ergeben sich bei dieser Einrichtung lange Transportwege für die Spannrahmen und demnach auch ein erhöhter Zeitaufwand beim Spannrahmenwechsel.

In der EP-A2 296 369 ist eine Vorrichtung zum automatischen Fördern von Spannrahmen in Transferstraßen geoffenbart, bei welcher zu beiden Seiten der Transferstraße jeweils vor und hinter der Bearbeitungsstation je 2 Spannrahmen angeordnet sind, welche zu beiden Seiten der Transferstraße auf je 2 ortsfesten Führungen in Längsrichtung bewegbar sind. Bei dieser Einrichtung ist einerseits die Anzahl der verfügbaren Spannrahmen von der Anzahl der Führungseinrichtungen abhängig, so daß sich auf Grund der Vervielfachung von Führungseinrichtungen ein unerwünschter Mehraufwand und demnach Mehrkosten ergeben. Ferner ist bei einer entsprechenden Anzahl von Spannrahmen und Führungseinrichtungen mit einem erheblichen Platzverbrauch zu rechnen.

Es ist daher ein Ziel der vorliegenden Erfindung, eine Möglichkeit zum Wechseln von Spannrahmen zu finden, bei welcher einerseits Kosten und Gewicht eingespart werden können, andererseits auch ein rascher Spannrahmenwechsel und eine platzsparende Aufbewahrung möglich ist.

Die Lösung der obigen Aufgabe ergibt sich bei einer Vorrichtung der eingangs genannten Art dadurch, daß die Spannrahmen an den Längs- bzw. Querschlitten lösbar und verriegelbar aufnehmbar sind, und daß im Bereich des Schnittpunktes der Bewegungsrichtung eines Längsschlittens und des zugeordneten Querschlittens eine Übergabeposition vorgesehen ist, an welcher der Längs- und der Querschlitten einander unmittelbar benachbart angeordnet sind, und zur Übergabe eines Spannrahmens von dem Längs- auf den Querschlitten bzw. umgekehrt an dem Längsschlitten ein Mittel zum Entriegeln bzw. Verriegeln und an dem Querschlitten ein Mittel zum Verriegeln bzw. Entriegeln des Spannrahmens vorgesehen ist. Dadurch, daß der Spannrahmen von dem Transportschlitten lösbar ist, kann dieser wesentlich leichter und damit auch kostengünstiger gefertigt werden. Weiters kann ein Spannrahmenwechsel aufgrund der leichteren Manipulierbarkeit der Spannrahmen rascher durchgeführt werden. Zusätzlich hat diese Lösung den Vorteil, daß zur Aufbewahrung des Spannrahmens aufgrund der geringeren Abmessungen weniger Platz beansprucht wird.

Bei einer erfindungsgemäßen Einrichtung hat es sich als Vorteil erwiesen, wenn zur selbsttätigen Verriegelung bzw. Entriegelung des Spannrahmens an dem Längs bzw. Querschlitten eine Steuerungseinrichtung vorgesehen ist, mittels welcher zugleich auch die Längsbewegung des Längsschlittens und die Querbewegung des Querschlittens angesteuert ist. Dadurch kann der Wechsel der Spannrahmen vollautomatisch und in kürzest möglicher Zeit durchgeführt werden.

Bei einer Ausführungsform der erfindungsgemäßen Einrichtung wird das Mittel zum Verriegeln bzw. Entriegeln des Spannrahmens durch betätigbare Verriegelungsbolzen oder Fanghaken gebildet, welche an dem Längs- bzw. Querschlitten angeordnet sind und in zugeordnete Verriegelungsbohrungen bzw. Gegenelemente des Spannrahmens eingreifen, wobei je Spannrahmen zumindest zwei Verriegelungsbohrungen oder Gegenelemente und an dem Längs- und dem Querschlitten zumindest je zwei Verriegelungsbolzen bzw. Fanghaken vorgesehen sind. Vorzugsweise sind die Verriegelungsbolzen und -bohrungen in Richtung parallel zur Fertigungsstraße ausgerichtet.

Eine besonders einfache Übergabe des Spannrahmens von dem Längs- auf den Querschlitten ergibt sich bei einem Ausführungsbeispiel dadurch, daß der Längsschlitten an seiner dem Querschlitten zugewandten Innenseite eine Ausnehmung aufweist, in welche an der Übergabeposition ein dem Längsschlitten zugewandter Teilabschnitt des Querschlittens aufgenommen und geführt ist. Dabei hat es sich als vorteilhaft erwiesen, wenn das dem Längsschlitten zugeordnete Mittel zum Verriegeln bzw. Entriegeln im Bereich der Ausnehmung des Längsschlittens und das dem Querschlitten zugeordnete Mittel zum Verriegeln bzw. Entriegeln an dem in den Längsschlitten aufnehmbaren Teilabschnitt des Querschlittens angeordnet ist.

Weiters kann die Zeit für einen Spannrahmenwechsel dadurch verringert werden, daß jeder Spannrahmen eine Energieversorgung, z.B. für elektrische u. hydraulische od. pneumatische Energie aufweist, welche bei Übergabe des Spannrahmens von dem Längs- auf den Querschlitten über eine Kupplung, z.B. eine Multikupplung, an den Querschlitten ankoppelbar ist.

Bei einer Ausführungsvariante kann vorgesehen sein, daß der Längsschlitten durch zwei aneinander gekoppelte Schlitten mit Aufnahmen für je einen Spannrahmen ausgebildet ist, wobei nur ein Schlitten angetrieben ist. Dadurch können die Schlitten mit geringen Abmessungen gefertigt werden, wobei dennoch nur ein einziger Antrieb vorzusehen ist.

Die Zeit für einen Spannrahmenwechsel kann weiter verringert werden, wenn der Längsschlitten in Richtung Fertigungsstraße zwischen zwei Positionen bewegbar ist, nämlich einer ersten Position, bei welcher ein erster Spannrahmen an der Übergabeposition und der zweite Spannrahmen an einer ersten Position zum Spannrahmenwechsel ausgerichtet sind, und einer zweiten Position, bei welcher der erste Spannrahmen an einer zweiten Position zum Spannrahmenwechsel und der zweite Spannrahmen an der Übergabeposition ausgerichtet sind, wobei die Übergabeposition in unmittelbarer Nähe der Bearbeitungsstation und die erste und die zweite Position zum Spannrahmenwechsel in Richtung Fertigungsstraße vor und hinter der Bearbeitungsstation angeordnet sind. Dadurch können in vorteilhafter Weise zugleich ein Spannrahmen vom dem Magazin auf den Längsschlitten gebracht und eine Spannrahmenübergabe von dem Längs- auf den Querschlitten durchgeführt werden und umgekehrt Weiters ist es bei einer Anordnung dieser Art von Vorteil, wenn im Bereich der ersten und/oder der zweiten Position zum Spannrahmenwechsel ein Magazin für Spannrahmen vorgesehen ist, in welchem Aufnahmen zur Aufbewahrung von zumindest zwei Spannrahmen vorgesehen sind, und daß jedes Spannrahmenmagazin eine Einrichtung zum Anheben, zum Verschieben quer zur Fertigungsstraße und zum Ablegen der Spannrahmen an zugeordneten Aufnahmeeinrichtungen aufweist.

Bei einer besonders vorteilhaften Ausführungsform der erfindungsgemäßen Einrichtung ist das Magazin als ein Hochregallager ausgebildet, in welchem zumindest zwei übereinander angeordnete Aufnahmeeinrichtungen für je einen Spannrahmen vorgesehen sind. Diese Lösung zeichnet sich in vorteilhafter Weise durch einen besonders geringen Platzverbrauch zur Aufbewahrung der Spannrahmen aus. Bei einer praktischen Ausführungsform der erfindungsgemäßen Vorrichtung ist somit vorgesehen, daß zu beiden Seiten der Fertigungsstraße je zwei Hochregallager angeordnet sind, welche jeweils im Bereich der ersten und der zweiten Position zum Spannrahmenwechsel angeordnet sind, um eine maximale Anzahl von Spannrahmen bereitstellen zu können.

Bei einer Vorrichtung mit einem Hochregallager ist es vorteilhaft, wenn die Einrichtung zum Anheben, zum Verschieben quer zur Fertigungsstraße und zum Ablegen der Spannrahmen in dem Hochregallager integriert angeordnet ist, wobei das Hochregallager an dem oberen Ende zumindest einen quer zur Fertigungsstraße ausgerichteten Ausleger aufweist, an welchem eine Hebevorrichtung, z.B. eine Gurthebevorrichtung, für die Spannrahmen angeordnet ist. Weiters kann der Hebemechanismus für die Spannrahmen dadurch verbessert werden, daß die Einrichtung zum Anheben ein Joch aufweist, welches zu beiden Seiten zumindest je ein Mittel zum Aufnehmen eines Spannrahmens, z.B. je einen in den Spannrahmen einschwenkbaren Haken, aufweist. Weiters ist bei einer Ausführungsform mit einem Hochregallager von Vorteil, wenn die Einrichtung zum Anheben, Verschieben quer zur Fertigungsstraße und zum Ablegen der Spannrahmen für jede Lagerstelle eines Spannrahmens in dem Hochregallager einen angetriebenen, quer zur Fertigungsstraße verschiebbar geführten Rahmen aufweist, an welchem die Aufnahmen für den Spannrahmen vorgesehen sind.

Weiters kann die für einen Spannrahmenwechsel erforderliche Zeit dadurch verringert werden, daß in der Bearbeitungsstation eine Arbeitsposition für den Spannrahmen vorgesehen ist, an welcher der Spannrahmen mit der Bearbeitungsstation exakt ausgerichtet und an dieser verankert ist, wogegen für alle anderen Wechsel- und Übergabemechanismen keine besonderen Toleranzen gefordert sind. Bei dieser Ausführungsvariante ist es besonders vorteilhaft, wenn im Bereich der Arbeitsposition des Spannrahmens ein Mittel zur Gewichtsentlastung des Spannrahmens in Abhängigkeit von seinem Gewicht vorgesehen ist. Das Mittel zur Gewichtsentlastung kann entweder in dem Querschlitten integriert angeordnet und durch die Steuerungseinheit des Querschlittens angesteuert sein oder als ein Abschnitt der Lagerung und Führung des Querschlittens im Bereich der Arbeitsposition ausgebildet sein.

Im folgenden wird an Hand der beiliegenden Figuren ein nicht einschränkendes Ausführungsbeispiel der erfindungsgemäßen Vorrichtung beschrieben, wobei die Figuren folgendes zeigen:
Fig. 1 eine perspektivische Darstellung eines Ausführungsbeispiels für die erfindungsgemäße Vorrichtung,
die Figuren 2, 3 und 4, die Vorrichtung von Fig. 1 in einer Ansicht von vorne, von der Seite und von oben,
Figur 5 einen Detailausschnitt im Bereich der lösbaren Verriegelung des Spannrahmens an dem Längs- bzw. Querschlitten,
Figur 6 einen Detailausschnitt mit dem Mittel zur Gewichtsentlastung des Spannrahmens und
Figur 7 ein schematisches Detail eines Ausführungsbeispiels der Bearbeitungsstation im Bereich der Schweißzelle mit einem schwenkbaren Grundelement in einer Seitenansicht.

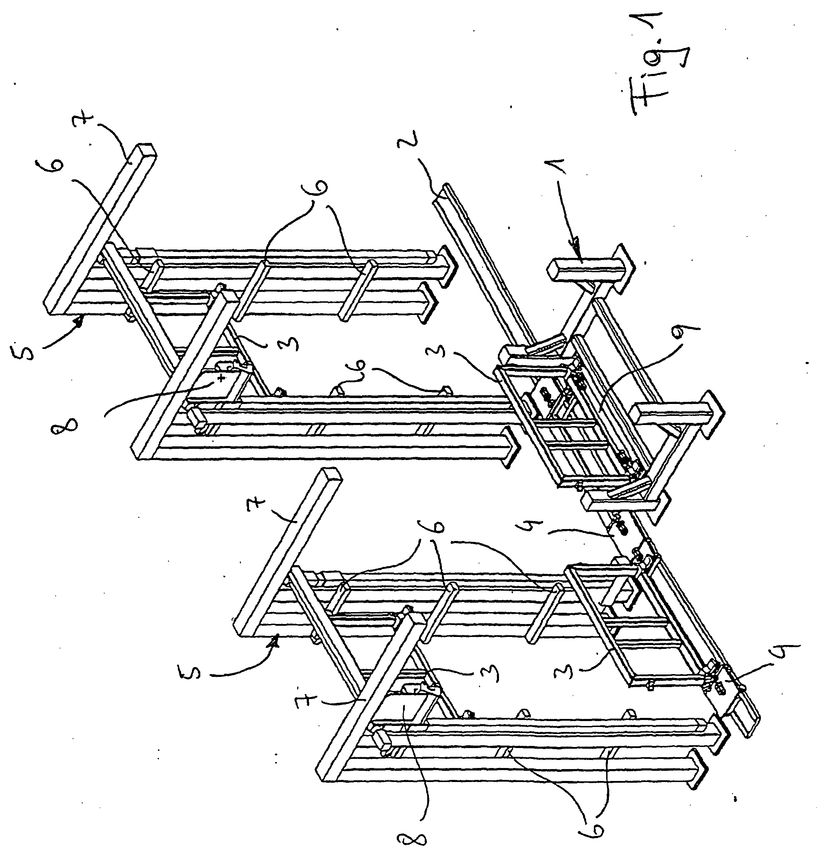

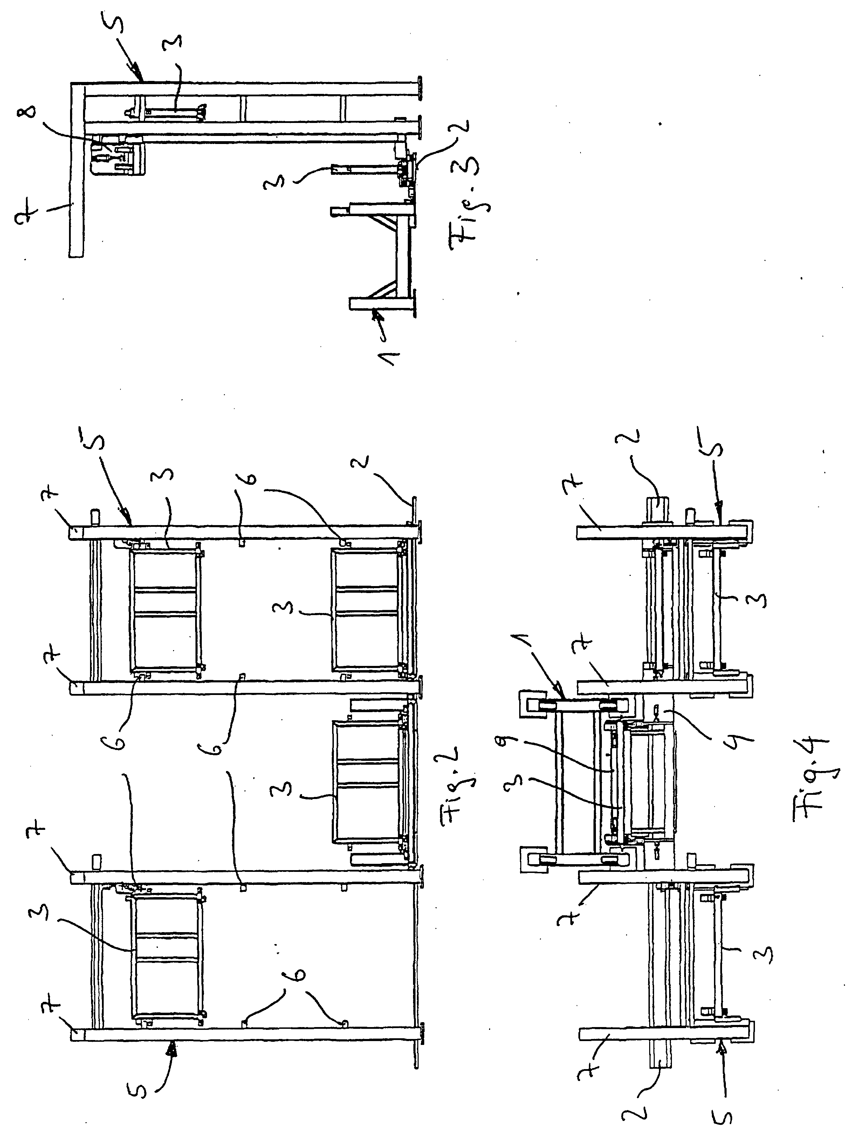

In den Figuren 1 bis 4 ist eine Vorrichtung zum Zuführen, Positionieren und Schweißen von Teilen einer Fahrzeugkarosserie in einer Bearbeitungsstation einer Fertigungsstraße dargestellt, wobei der Einfachheit halber nur eine Seite, zum Beispiel die linke Seite der Fertigungsstraße zu sehen ist.

Die in den Figuren dargestellte Vorrichtung weist eine Schweißzelle 1 auf, von welcher lediglich der Grundrahmen dargestellt ist. Zu beiden Seiten der Schweißzelle 1 ist parallel zur Fertigungsstraße je eine Schiene 2 angeordnet, entlang welcher Spannrahmen 3 zwischen einer der Schweißzelle 1 zugewandten Übergabeposition und je einer vor bzw. nach der Schweißzelle 2 angeordneten Position für den Spannrahmenwechsel verfahrbar sind.

Zur Bewegung entlang der Schienen 2 sind die Spannrahmen 3 an je einem angetriebenen Längsschlitten 4 lösbar und verriegelbar angeordnet. Der Längsschlitten 4 kann in Bewegungsrichtung hintereinander zwei Spannrahmen 3 aufnehmen, die an geeigneten Aufnahmen festlegbar sind. Alternativ dazu können auch zwei Längsschlitten für je einen Spannrahmen vorgesehen sein, wobei ein angetriebener Längsschlitten mit einem weiteren, nicht angetriebenen Längsschlitten gekoppelt ist. Die Längsabmessungen des Längsschlitten 4 sind so bemessen und die Steuerung seines Antriebes in der Weise eingerichtet, daß eine erste Aufnahme für einen Spannrahmen an der Position für den Spannrahmenwechsel (vor und nach der Schweißzelle) und die zweite Aufnahme für den zweiten Spannrahmen an der Übergabeposition ausgerichtet sind, sodaß ein Spannrahmenwechsel und eine Spannrahmenübergabe zugleich erfolgen können.

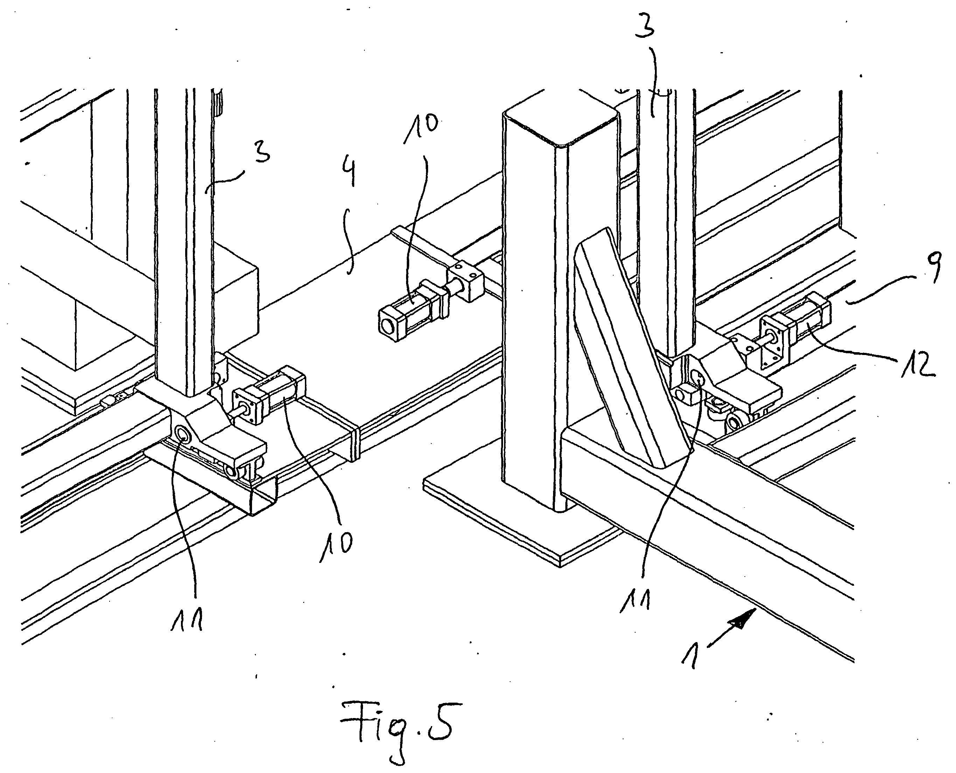

Im Bereich der Bearbeitungsstation 1 ist weiters ein angetriebener Querschlitten 9 vorgesehen, welcher quer zur Fertigungsstraße zwischen einer der Karosserie zugewandten Arbeitsposition und einer der Schiene zugewandten Übergabeposition verfahrbar ist. Sowohl der Längs- als auch der Querschlitten sind zur Übernahme bzw. Übergabe eines Spannrahmens 3 von dem Längsschlitten 4 auf den Querschlitten 9 eingerichtet. Zu diesem Zweck kann der Längsschlitten im Bereich der Aufnahmen für die Spanrahmen an seiner dem Querschlitten zugewandten Seite je eine U-förmige Ausnehmung aufweisen, welche bei der Spannrahmen-Übergabe als Führung für einen Teilabschnitt des Querschlittens dient. Diese U-förmige Ausnehmung ist jedoch nicht unbedingt erforderlich. Jeder Spannrahmen 3 ist sowohl an dem Längs- 4 als auch an dem Querschlitten 9 verriegelbar und lösbar angeordnet, wobei bei einer Übergabe von dem Längs- 4 auf den Querschlitten 9 vorerst der Spannrahmen 3 an dem Querschlitten 9 verriegelt und sodann an dem Längsschlitten 4 entriegelt wird. Bei einer Übergabe von dem Quer- auf den Längsschlitten erfolgt der umgekehrte Vorgang. Die in Figur 5 anhand eines nicht einschränkenden Ausführungsbeispiels dargestellten Verriegelungseinrichtungen des Längs- und des Querschlittens werden durch eine gemeinsame Steuerungseinrichtung angesteuert, sodaß sowohl die Bewegung der Schlitten als auch die Spannrahmenübergabe selbsttätig erfolgt.

Zur Versorgung des Spannrahmens 3 mit Energie (elektrisch, hydraulisch, z.B. mittels Wasser, und/oder pneumatisch) ist weiters an dem Querschlitten 9 eine entsprechende (nicht dargestellte) Kupplung, z.B. eine Multikupplung vorgesehen, welche automatisch bei Übernahme des Spannrahmens 3 von dem Längsschlitten 4 betätigt wird.

In Figur 5 ist ein Ausführungsbeispiel für Verriegelungseinrichtungen zur lösbaren Befestigung des Spannrahmens 3 an dem Längs- und dem Querschlitten im Detail dargestellt. Zur Verriegelung des Spannrahmens 3 an dem Längsschlitten 4 sind im Bereich der Berandung der U-förmigen Ausnehmung für jede Spannrahmenaufnahme zwei betätigbare Verriegelungsbolzen 10 angeordnet, welche in zugeordneten Bohrungen 11 des Spannrahmens 3 eingreifen. Bei dem dargestellten Ausführungsbeispiel sind die dem Längsschlitten 4 zugeordneten Verriegelungen 10 - in Richtung Fertigungsstraße gesehen - vor und hinter dem Spannrahmen 3 angeordnet. Die vorliegende Erfindung ist jedoch keineswegs auf die Verwendung von bestimmten Verriegelungsmitteln eingeschränkt. Vielmehr können im Rahmen der Erfindung alle geeigneten, dem Fachmann bekannten Verriegelungseinrichtungen Verwendung finden, beispielsweise auch Spanner oder Fanghaken, die mit geeigneten Gegenelementen kooperieren.

Zur Verriegelung des Spannrahmens mit dem Querschlitten 9 sind an dem Querschlitten ebenso betätigbare Verriegelungsbolzen 12 vorgesehen, welche in die Bohrungen 11 eingreifen können, und zwar von der den Bolzen 10 abgewandten Seite der Bohrungen 11.

Natürlich besteht im Rahmen der vorliegenden Erfindung auch die Möglichkeit, Verriegelungsbolzen an den Spannrahmen und Verriegelungsbohrungen an den Längs- und Querschlitten anzuordnen.

Die Betätigungen für die Verriegelungsbolzen 10, 12 können elektrisch, pneumatisch oder hydraulisch sein. Die Abmessungen der Bolzen und der Bohrungen sind so gewählt, daß diese eine gewisse Toleranz zueinander aufweisen, um die Übergabe eines Spannrahmens von dem Längs- auf den Querschlitten ohne besondere Präzision der Steuerung bzw. der Bauteile und somit in kürzest möglicher Zeit bewältigen zu können. Eine exakte Ausrichtung des Spannrahmens erfolgt erst in der Arbeitsposition des Spannrahmens 3.

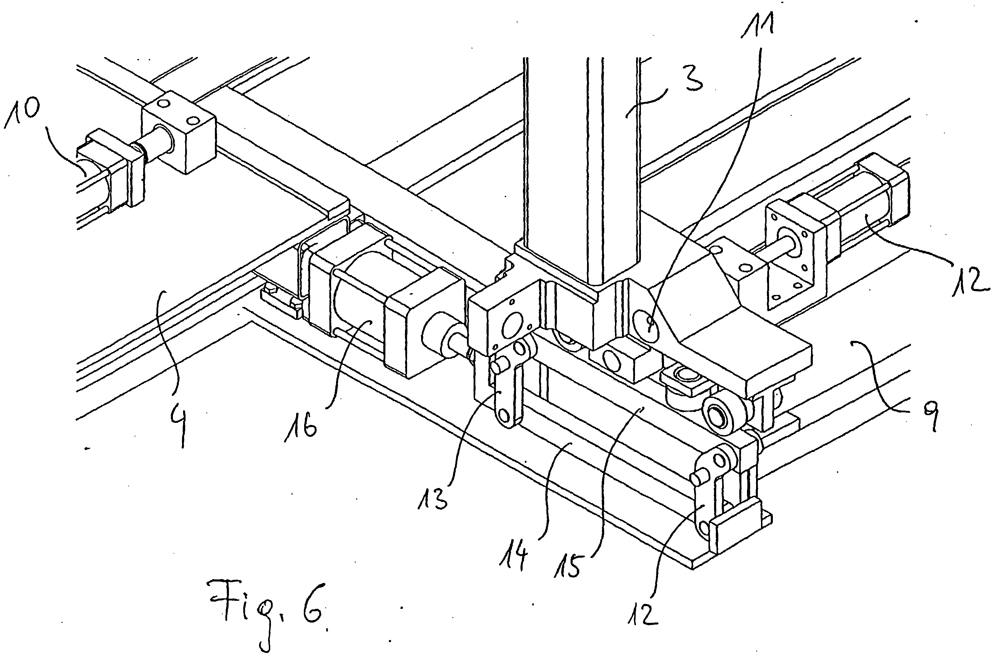

In Figur 6 ist ein Detailausschnitt des Spannrahmens 3 im Bereich seiner Arbeitsposition dargestellt, wo zur Verschleißminderung beim Zentrieren der Spannrahmen auf dem Grundgestell 1 eine Gewichtsentlastung des Spannrahmens vorgesehen ist, um bei der exakten Ausrichtung mit der Schweißzelle unterschiedliche Spannrahmen-Gewichte berücksichtigen zu können. Diese Höhenverstellung erfolgt bei dem gezeigten Ausführungsbeispiel durch zwei zweiarmige Winkelhebel 13, die unterhalb des Querschlittens angeordnet sind und über zwei horizontale Balken 14, 15 zu einem Viergelenk verbunden sind. Auf dem an den Lastarmen gelagerten Balken 15 ist der Querschlitten 9 gelagert, wogegen die mit dem Balken 14 verbundenen Kraftarme mit einer Stelleinheit 16, z.B. einer elektrischen, pneumatischen oder hydraulischen Einheit gekoppelt sind. Durch die Betätigung der Stelleinheit 16 in horizontaler Richtung kann der Balken 15 und somit die Höhenlage des Spannrahmens 3 verstellt werden, um die unterschiedlichen Gewichte solcher Spannrahmen zu berücksichtigen und so eine verschleißarme Ausrichtung mit der Schweißzelle zu ermöglichen. Für jeden Spannrahmen wird durch die Steuerung eine unterschiedliche Kraft vorgegeben, sodaß die Gewichtsentlastung des Spannrahmens 3 aufgrund des vorbestimmten Gewichtes jedes Spannrahmens angesteuert wird. Die Krafteinstellung kann mittels Druckluftventile erfolgen. Bei einer alternativen Ausführungsform kann eine Gewichtsentlastung des Spannrahmens auch im Querschlitten integriert angeordnet sein.

Wie in den Figuren 1 bis 4 zu sehen ist, ist vor und nach der Schweißzelle 1 bei dem dargestellten Ausführungsbeispiel zu beiden Seiten der Fertigungsstraße je ein Hochregallager 5 vorgesehen, welches unmittelbar neben der Schiene 2 im Bereich der Position für den Spannrahmenwechsel angeordnet ist. In jedem Hochregallager 5 sind bei dem gezeigten Ausführungsbeispiel übereinander drei Aufnahmen 6 zur Aufbewahrung je eines Spannrahmens 6 angeordnet.

Weiters ist jedes Hochregallager 5 mit einer Hebeeinrichtung 8, z.B. eine Gurthebeeinrichtung, versehen, mittels welcher die Spannrahmen 3 von dem Längsschlitten 4 angehoben und an je einem (nicht dargestellten) Aufnahmerahmen des Hochregallagers 2 abgelegt werden können, wobei die Aufnahmerahmen des Hochregallagers 2 in Richtung quer zur Fertigungsstraße verfahrbar sind. Bei dem gezeigten Ausführungsbeispiel sind für die Hebeeinrichtung an dem oberen Ende jedes Hochregallagers 2 quer zur Fertigungsstraße ausgerichtete Ausleger 7 vorgesehen, an welchen die Hebeeinrichtung angeordnet ist. Zum Aufnehmen der Spannrahmen ist in der Hebeeinrichtung ein (ebenso nicht dargestelltes) Joch vorgesehen, welches mit geeigneten Aufnahmeeinrichtungen, z.B. einschwenkbare Haken ausgerüstet ist, um einen Spannrahmen aufnehmen und anheben zu können.

Die Aufbewahrung der Spannrahmen, der Spannrahmenwechsel und die Spannrahmenübergabe erfolgt bei der in den Figuren dargestellten Vorrichtung wie folgt:

Der zu wechselnde Spannrahmen 3 ist an seiner Spannrahmenwechsel-Position vor oder nach der Schweißzelle 1 auf dem Längsschlitten 4 verriegelt, und zwar an der der Schweißzelle abgewandten Seite des Längsschlittens.

Mit der Hebeeinrichtung 8 wird der Spannrahmen 3 aufgenommen, die Verriegelung des Spannrahmens 3 mit dem Längsschlitten 4 wird sodann gelöst und der Spannrahmen 3 kann mittels der Hebeeinrichtung 8 angehoben, an einem Aufnahmerahmen abgelegt und mittels diesem quer zur Fertigungsstraße verschoben und an einem freien Lagerplatz abgelegt werden.

Auf dem Längsschlitten 4 befindet sich nun kein Spannrahmen. Dieser kann jetzt einen neuen Spannrahmen aufnehmen. Dazu kann er an seiner Position verbleiben, um einen neuen Spannrahmen aus demselben Magazin aufzunehmen, oder an das gegenüberliegende Ende der Schiene verfahren werden, um dort einen neuen Spannrahmen 3 aus dem gegenüberliegenden Magazin aufzunehmen.

Mit der Hebeeinrichtung 8 wird sodann ein gewünschter Spannrahmen 3 aus dem Regal entnommen, und auf dem freien Längsschlitten 4 abgesetzt, wonach die Verriegelung 10, 11 des Spannrahmens 3 mit dem Längsschlitten 4 betätigt wird. Sodann wird der Spannrahmen 3 von der Hebeeinrichtung 8 freigegeben und ist bereit, in seine Arbeitsposition gebracht zu werden, wo sich noch ein auszuwechselnder Spannrahmen befindet.

Zu diesem Zweck ist vorerst eine Übergabe des auszuwechselnden Spannrahmens 3 von dem Querschlitten 9 auf die noch freie zweite Aufnahmeposition des Längsschlittens 4 erforderlich. Dies erfolgt dadurch, daß der Spannrahmen 3 an seiner Arbeitsposition entriegelt, von dem Querschlitten 9 aufgenommen und in Richtung Längsschlitten 4 transportiert wird, bis der Querschlitten 9 mit seinem dem Längsschlitten zugewandten Teilabschnitt in der U-förmigen Ausnehmung des Längsschlittens aufgenommen ist. In dieser Position sind die Verriegelungsbolzen 10 mit den Verriegelungsbohrungen 11 ausgerichtet und können miteinander in Eingriff gebracht werden, um den Spannrahmen an dem Längsschlitten zu verriegeln. Unmittelbar danach wird die Verriegelung 11, 12 des Spännrahmens mit dem Querschlitten durch Betätigen der Verriegelungsbolzen entriegelt.

Der leere Querschlitten 9 kann nun in Richtung Arbeitsposition verfahren werden, um eine ungehinderte Längsbewegung des Längsschlittens zu ermöglichen. In der Schweißzelle befindet sich nun kein Spannrahmen. Auf dem Längsschlitten befinden sich nun zwei Spannrahmen, nämlich der auszuwechselnde und der neue Spannrahmen.

Der auszuwechselnde Spannrahmen wird mittels des Längsschlittens 4 zusammen mit dem neuen Spannrahmen parallel zur Fertigungsstraße verschoben, bis der neue Spannrahmen 3 gegenüber dem Querschlitten 9 ausgerichtet ist. Nun wird der Querschlitten 9 wieder in Richtung Längsschlitten 4 bewegt, bis die Verriegelungseinrichtungen 11, 12 mit dem neuen Spannrahmen 3 ausgerichtet sind. Sodann wird der neue Spannrahmen 3 durch die Betätigungseinrichtungen der Verriegelungsbolzen 10, 12 mit dem Querschlitten 9 verriegelt und mit dem Längsschlitten 4 entriegelt.

Abschließend wird der Querschlitten 9 quer zur Fertigungsstraße in die Arbeitsposition des Spannrahmens 3 verfahren, wo dieser mit dem Grundgestell der Schweißzelle 1 exakt ausgerichtet und verankert wird. Zugleich oder danach kann der noch auf dem Längsschlitten befindliche Spannrahmen durch die Hebeeinrichtung aufgenommen und an einer freien Lagerstelle des Hochregallagers abgelegt werden.

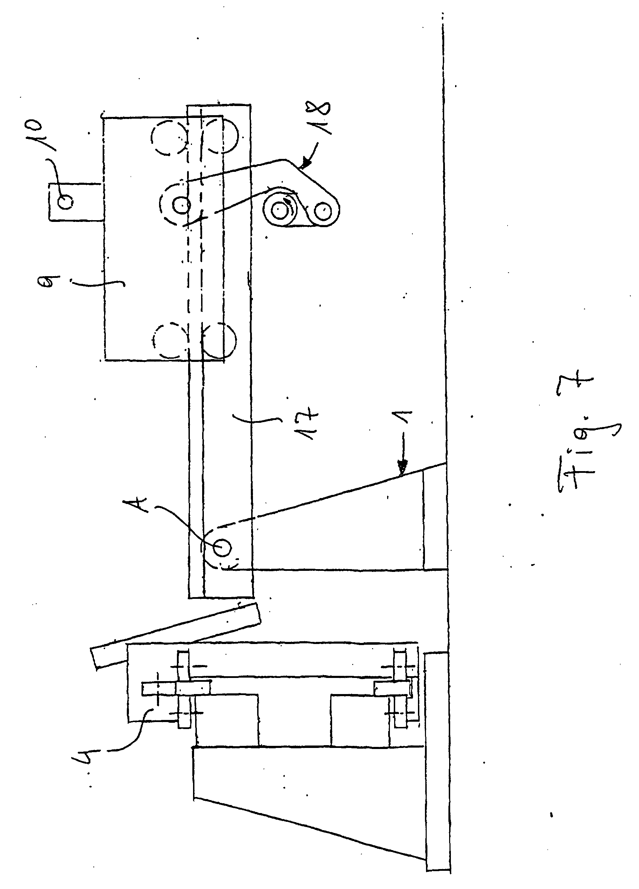

Figur 7 zeigt eine schematische Darstellung einer besonderen Ausführungsform der Bearbeitungsstation, bei welcher ein Element 17 der Schweißzelle 1, welches auch die Führung des Querschlittens 9 umfaßt, um eine horizontale Achse A, die parallel zur Fertigungsrichtung ausgerichtet ist, an dem Grundgestell der Schweißzelle 1 schwenkbar angeordnet ist. Durch diese Schwenkbewegung kann der (in Fig. 7 nicht dargestellte) Spannrahmen nach außen geneigt werden, um in dieser geneigten Position einfacher Karosserieteile aufnehmen zu können. Der Neigemechanismus wird bei dem dargestellten Ausführungsbeispiel durch einen Kurbelantrieb 18 betätigt, welcher durch die Steuerungseinrichtung der Bearbeitungsstation angesteuert wird. Bei dieser Ausführungsvariante kann die Übergabe des Spannrahmens von dem Quer- auf den Längsschlitten und umgekehrt in der geneigten Position des Spannrahmens durchgeführt werden. Weiters ist es möglich, den Gewichtsausgleich für die unterschiedlichen Spannrahmen durch den Kurbelantrieb 18 zu realisieren.

Abschließend ist noch zu bemerken, daß das mit Bezug auf die Figuren beschriebene Ausführungsbeispiel nicht einschränkend ist. Beispielsweise können Spannrahmen auch in anderen beliebigen Magazinen aufbewahrt werden. Insbesondere können an jeder Seite der Fertigungsstraße zu beiden Seiten der Schiene Magazine vorgesehen sein. Ebenso können die Spannrahmen an den Längs- und Querschlitten durch alle dem Fachmann bekannten Verriegelungseinrichtungen lösbar angeordnet sein. Weiters kann die Gewichtsentlastung für die Spannrahmen in jeder beliebigen Form realisiert werden, gegebenenfalls auch weggelassen werden.

## Patentansprüche

1. Vorrichtung zum Zuführen, Positionieren und Schweißen von Teilen einer Fahrzeugkarosserie in einer Bearbeitungsstation einer Fertigungsstraße, bei welcher zum Zuführen und Positionieren der Karosserieteile zu beiden Seiten der Fertigungsstraße zumindest je ein auswechselbarer Spannrahmen (3) vorgesehen ist, wobei jeder Spannrahmen quer zur Fertigungsstraße verschiebbar und anhebbar angeordnet ist und zum Aufbewahren von Spannrahmen zumindest ein Magazin (5) vorgesehen ist, wobei zur Bewegung der Spannrahmen (3) in Richtung parallel zur Fertigungsstraße zu beiden Seiten der Bearbeitungsstation je ein angetriebener, entlang einer Schiene bewegbarer Längsschlitten (4) vorgesehen ist, an welchem zumindest zwei, in Richtung parallel zur Fertigungsstraße hintereinander angeordnete Spannrahmen aufnehmbar sind, und zur Bewegung der Spannrahmen in Richtung quer zur Fertigungsstraße je ein angetriebener Querschlitten (9) vorgesehen ist, welcher quer zur Fertigungsstraße verschiebbar ist und an welchem ein Spannrahmen aufnehmbar ist, **dadurch gekennzeichnet, daß** die Spannrahmen an den Längs- bzw. Querschlitten (4 bzw. 9) lösbar und verriegelbar aufnehmbar sind, und daß im Bereich des Schnittpunktes der Bewegungsrichtung eines Längsschlittens (4) und des zugeordneten Querschlittens (9) eine Übergabeposition vorgesehen ist, an welcher der Längs- und der Querschlitten einander unmittelbar benachbart angeordnet sind, und zur Übergabe eines Spannrahmens von dem Längs- auf den Querschlitten bzw. umgekehrt an dem Längsschlitten ein Mittel zum Entriegeln bzw. Verriegeln und an dem Querschlitten ein Mittel zum Verriegeln bzw. Entriegeln des Spannrahmens vorgesehen ist.

2. Vorrichtung nach Anspruch 1, **dadurch gekennzeichnet, daß** zur selbsttätigen Verriegelung bzw. Entriegelung des Spannrahmens (3) an dem Längs (4) bzw. Querschlitten (9) eine Steuerungseinrichtung vorgesehen ist, mittels welcher zugleich auch die Längsbewegung des Längsschlittens und die Querbewegung des Querschlittens angesteuert ist.

3. Vorrichtung nach Anspruch 1 oder 2, **dadurch gekennzeichnet, daß** das Mittel zum Verriegeln bzw. Entriegeln des Spannrahmens durch betätigbare Verriegelungsbolzen (10) gebildet wird, welche an dem Längs- bzw. Querschlitten angeordnet sind und in zugeordnete Verriegelungsbohrungen (11) des Spannrahmens (3) eingreifen, wobei je Spannrahmen zumindest zwei Verriegelungsbohrungen und an dem Längs- und dem Querschlitten zumindest je zwei Verriegelungsbolzen vorgesehen sind.

4. Vorrichtung nach Anspruch 3, **dadurch gekennzeichnet, daß** die Verriegelungsbolzen (10) und -bohrungen (11) in Richtung parallel zur Fertigungsstraße ausgerichtet sind.

5. Vorrichtung nach einem der Ansprüche 1 bis 4, **dadurch gekennzeichnet, daß** der Längsschlitten (4) an seiner dem Querschlitten (9) zugewandten Innenseite eine Ausnehmung aufweist, in welche an der Übergabeposition ein dem Längsschlitten zugewandter Teilabschnitt des Querschlittens aufgenommen und geführt ist.

6. Vorrichtung nach Anspruch 5, **dadurch gekennzeichnet, daß** das dem Längsschlitten (4) zugeordnete Mittel zum Verriegeln bzw. Entriegeln im Bereich der Ausnehmung des Längsschlittens und das dem Querschlitten zugeordnete Mittel zum Verriegeln bzw. Entriegeln an dem in den Längsschlitten aufnehmbaren Teilabschnitt des Querschlittens angeordnet ist.

7. Vorrichtung nach einem der Ansprüche 1 bis 6, **dadurch gekennzeichnet, daß** jeder Spannrahmen (3) eine Energieversorgung, z.B. für elektrische u. hydraulische od. pneumatische Energie aufweist, welche bei Übergabe des Spannrahmens von dem Längs- auf den Querschlitten über eine Kupplung, z.B. eine Multikupplung, an den Querschlitten ankoppelbar ist.

8. Vorrichtung nach einem der Ansprüche 1 bis 7, **dadurch gekennzeichnet, daß** der Längsschlitten (4) durch zwei aneinander gekoppelte Schlitten mit Aufnahmen für je einen Spannrahmen ausgebildet ist, wobei nur ein Schlitten angetrieben ist.

9. Vorrichtung nach einem der vorigen Ansprüche, **dadurch gekennzeichnet, daß** der Längsschlitten (4) in Richtung Fertigungsstraße zwischen zwei Positionen bewegbar ist, nämlich einer ersten Position, bei welcher ein erster Spannrahmen an der Übergabeposition und der zweite Spannrahmen an einer ersten Position zum Spannrahmenwechsel ausgerichtet sind, und einer zweiten Position, bei welcher der erste Spannrahmen an einer zweiten Position zum Spannrahmenwechsel und der zweite Spannrahmen an der Übergabeposition ausgerichtet sind, wobei die Übergabeposition in unmittelbarer Nähe der Bearbeitungsstation und die erste und die zweite Position zum Spannrahmenwechsel in Richtung Fertigungsstraße vor und hinter der Bearbeitungsstation (1) angeordnet sind.

10. Vorrichtung nach Anspruch 9, **dadurch gekennzeichnet, daß** im Bereich der ersten und/oder der zweiten Position zum Spannrahmenwechsel ein Magazin (5) für Spannrahmen (3) vorgesehen ist, in welchem Aufnahmen (6) zur Aufbewahrung von zumindest zwei Spannrahmen vorgesehen sind, und daß jedes Spannrahmenmagazin eine Einrichtung (8) zum Anheben, zum Verschieben quer zur Fertigungsstraße und zum Ablegen der Spannrahmen an zugeordneten Aufnahmeeinrichtungen aufweist.

11. Vorrichtung nach Anspruch 10, **dadurch gekennzeichnet, daß** das Magazin als ein Hochregallager (5) ausgebildet ist, in welchem zumindest zwei übereinander angeordnete Aufnahmeeinrichtungen (6) für je einen Spannrahmen (3) vorgesehen sind.

12. Vorrichtung nach Anspruch 11, **dadurch gekennzeichnet, daß** zu beiden Seiten der Fertigungsstraße je zwei Hochregallager (5) vorgesehen sind, welche jeweils im Bereich der ersten und der zweiten Position zum Spannrahmenwechsel angeordnet sind.

13. Vorrichtung nach Anspruch 11 oder 12, **dadurch gekennzeichnet, daß** die Einrichtung zum Anheben, zum Verschieben quer zur Fertigungsstraße und zum Ablegen der Spannrahmen (3) in dem Hochregallager (5) integriert angeordnet ist, wobei das Hochregallager an dem oberen Ende zumindest einen quer zur Fertigungsstraße ausgerichteten Ausleger (7) aufweist, an welchem eine Hebevorrichtung (8), z.B. eine Gurthebevorrichtung, für die Spannrahmen angeordnet ist.

14. Vorrichtung nach Anspruch 13, **dadurch gekennzeichnet, daß** die Einrichtung (8) zum Anheben ein Joch aufweist, welches zu beiden Seiten je ein Mittel zum Aufnehmen eines Spannrahmens, z.B. einen in den Spannrahmen einschwenkbaren Haken, aufweist.

15. Vorrichtung nach Anspruch 13 oder 14, **dadurch gekennzeichnet, daß** die Einrichtung (8) zum Anheben, Verschieben quer zur Fertigungsstraße und zum Ablegen der Spannrahmen für jede Lagerstelle eines Spannrahmens einen angetriebenen, quer zur Fertigungsstraße verschiebbar geführten Rahmen aufweist, an welchem die Aufnahmen für den Spannrahmen vorgesehen sind.

16. Vorrichtung nach einem der vorigen Ansprüche, **dadurch gekennzeichnet, daß** in der Bearbeitungsstation (1) eine Arbeitsposition für den Spannrahmen vorgesehen ist, an welcher der Spannrahmen mit der Bearbeitungsstation exakt ausgerichtet und an dieser verankert ist.

17. Vorrichtung nach Anspruch 16, **dadurch gekennzeichnet, daß** im Bereich der Arbeitsposition des Spannrahmens (3) ein Mittel zur Gewichtsentlastung des Spannrahmens in Abhängigkeit von seinem Gewicht vorgesehen ist.

18. Vorrichtung nach Anspruch 17, **dadurch gekennzeichnet, daß** das Mittel zur Gewichtsentlastung in dem Querschlitten (9) integriert angeordnet und durch die Steuerungseinheit des Querschlittens in Abhängigkeit von dem vorbestimmten Gewicht des aktuellen Spannrahmens angesteuert ist.

19. Vorrichtung nach Anspruch 17, **dadurch gekennzeichnet, daß** das Mittel zur Gewichtsentlastung als ein Abschnitt der Lagerung und Führung des Querschlittens (9) im Bereich der Arbeitsposition ausgebildet ist.

20. Vorrichtung nach einem der Ansprüche 1 bis 19, **dadurch gekennzeichnet, daß** ein im Bereich der Arbeitsposition des Spannrahmens (3) angeordnetes Element der Schweißzelle (1), welches zumindest abschnittsweise auch die Führung des Querschlittens (9) umfaßt, um eine horizontal und parallel zur Fertigungsrichtung ausgerichtete Achse (A) schwenkbar angeordnet ist, um den Spannrahmen aus seiner Arbeitsposition in eine nach außen geneigte Position zurAufnahme von Karosserieteilen zu neigen.

21. Vorrichtung nach Anspruch 20, **dadurch gekennzeichnet, daß** sich das schwenkbare Element der Schweißzelle (1) von der Arbeitsposition bis zu den Schienen des Längsschlittens erstreckt, wobei die Übergabe eines Spannrahmens von dem Quer- auf den Längsschlitten in der geneigten Position erfolgt.

22. Vorrichtung nach Anspruch 20 oder 21, **dadurch gekennzeichnet, daß** dem schwenkbaren Element ein Antrieb, insbesondere ein Kurbelantrieb (18) zugeordnet ist, welcher durch die Steuereinheit angesteuert ist.

## Claims

1. An apparatus for guiding, positioning and welding car body components in a machining station of a production line, in which there is provided for guiding and positioning the car body component on both sides of the production line at least one changeable clamping frame (3), wherein each clamping frame is arranged to be movable transversally and vertically with respect to production line and wherein at least one storage means (5) is provided for the storage of the clamping frames, **characterised in that** for moving the clamping frames (3) in a direction parallel to the production line to both sides of the processing station, **in that** there is provided a controllable carrier (4) movable longitudinally along a rail, on which are received at least two clamping frames arranged one behind the other in the direction parallel to the production line, **in that** there is provided a controllable carrier (9), movable transversally with respect to the direction of the production line and which can receive a clamping frame, **in that** the clamping frames are received on the longitudinally or transversally movable carriers (respectively 4 and 9), on which they can be locked / from which they can be released, **in that** in the region of the intersection point of the motion direction of the longitudinally movable carrier (4) and of the transversally movable carrier, there is provided a transfer station at which the longitudinally movable carrier and the transversally movable carrier are closely contiguous and **in that** means are provided for locking / releasing the clamping frames on / from the longitudinally movable carrier and the transversally movable carriers to enable the transfer of the clamping frames from the transversally movable carrier to the longitudinally movable carrier and conversely.

2. An apparatus according to claim 1, **characterised in that** there is provided a control unit for the locking / releasing means for the clamping frames (3) to / from the transversally movable carrier or the longitudinally movable carrier, which simultaneously controls the longitudinal motion of the longitudinally movable carrier and the transversal motion of the transversally movable carrier.

3. An apparatus according to claim 1 or 2, **characterised in that** the means for locking / releasing the frame holder are constructed as controllable locking bolts (10) which are provided on the longitudinally movable carrier and on the transversally clamping frames (3), and **in that** each clamping frame includes at least two locking bores and the longitudinally movable carrier and the transversally movable carrier include at least two locking bolts.

4. An apparatus according to claim 3, **characterised in that** the locking bolts (10) and the locking bores (11) are aligned in a direction running parallel to the production line.

5. An apparatus according to one of claims 1 to 4, **characterised in that** the longitudinally movable carrier (4) exhibits on the inner side facing the transversally movable carrier (9) a recess, in which is received and guided a portion of the transversally movable carrier on the side facing the longitudinally movable carrier, at the transfer position.

6. An apparatus according to claim 5, **characterised in that** the locking / releasing means of the longitudinally movable carrier are arranged in the region of the recess of the longitudinally movable carrier and **in that** the locking / releasing means of the transversally movable carrier are arranged on the portion of the transversally movable carrier which can be received in the longitudinally movable carrier.

7. An apparatus according to one of claims 1 to 6, **characterised in that** each clamping frame (3) has a power supply, for example electrical, hydraulic or pneumatic, which at the transfer of the clamping frame from the longitudinally movable carrier onto the transversally movable carrier is connectable, via a coupling, for example a multiple coupling, to the transversally movable carrier.

8. An apparatus according to one of claims 1 to 7, **characterised in that** the longitudinally movable carrier (4) is constructed from two mutually coupled carriers which are arranged so that each one can receive one clamping frame and of which only one is controlled.

9. An apparatus according to one of the preceding claims, **characterised in that** the longitudinally movable carrier (4) can be moved along the direction of the production line between two positions, namely a first position, in which a first clamping frame is aligned with the transfer position and the second clamping frame is aligned with a first position for changing the clamping frame and a second position in which the first clamping frame is aligned with a second position for changing the clamping frame and the second clamping frame is aligned with the transfer position, wherein the transfer position is in the immediate vicinity of the machining station and the first and the second positions for changing the clamping frame are located in the direction of the production line in front and after the machining station (1).

10. An apparatus according to claim 9, **characterised in that** in the region of the first and / or the second position for changing the clamping frames, there is provided a storage means (5) for the clamping frames (3) in which receiver means (6) are provided for storing at least two clamping frames and **in that** each storage means has a device (8) for lifting, for moving transversally with respect to the production line and placing the clamping frame on an appropriate receiver device.

11. An apparatus according to claim 10, **characterised in that** the storage means (5) constructed as a tall storage means with shelves, in which at least two receiver means are provided for each clamping frame (3), one above the other.

12. An apparatus according to claim 11, **characterised in that** on both sides of the production line there are provided two tall storage means with shelves (5) which are positioned, respectively, in the region of the first and second positions for changing the clamping frames.

13. An apparatus according to claim 11 or 12, **characterised in that** the device for lifting, for moving transversally with respect to the production line and placing the clamping frames (3) on the tall storage means with shelves (5) is constructed in such a manner that the tall storage means with shelves (5) is provided at its upper end with a cantilever arm (7) on which is arranged transversally, with respect to the production line, a lifting device (8) for the clamping frames, for example a belt lifting device.

14. An apparatus according to claim 13, **characterised in that** the lifting device (8) has a bridge which is provided at each side with a means for holding a clamping frame, for example hooks engaged with the clamping frame.

15. An apparatus according to claim 13 or 14, **characterised in that** the device (8) for lifting, for moving transversally with respect to the production line and placing the clamping frames has, for each support position of a clamping frame a frame which can be moved controllably in the transverse direction with respect to the production line, on which are received the clamping frames.

16. An apparatus according to one of the preceding claims, **characterised in that** at the machining station (1) there is provided a work position for the clamping frames in which the clamping frame is aligned exactly with the machining station and are anchored to the same.

17. An apparatus according to claim 16, **characterised in that** in the region of the work position of the clamping frame (3) a weight alleviating means is provided for the clamping frame, which is dependent upon its weight.

18. An apparatus according to claim 17, **characterised in that** the weight alleviating means is integrated in the transversally movable carrier (9) and is controlled by the control unit of the transversally movable carrier according to the previously determined weight of the clamping frame.

19. An apparatus according to claim 17, **characterised in that** the weight alleviating means is realised as a section of the receiver and the guide means of the transversally movable carrier (9) in the region of the work position.

20. An apparatus according to any one of claims 1 to 19, **characterised in that**, in the region of the work position of the clamping frame (3), there is provided an element of the welding cell (1), which ensures at least partly the guiding of the transversally movable carrier (9) in such a manner that it may rotate around a horizontal axis which is parallel to the production line, to pivot the clamping holder out of its work position to slant outwards in an appropriate position for receiving the car body part.

21. An apparatus according to claim 20, **characterised in that** the pivotal element of the welding cell (1) extends from the work position up to the rails of the longitudinally movable carrier, thus enabling the transfer of a clamping frame from the transversally movable carrier onto the longitudinally movable carrier, in the appropriate position

22. An apparatus according to claim 20 or 21, **characterised in that** the pivotal element includes an actuator, in particular a crank type actuator (18) which is controlled by the control unit.

## Revendications

1. Dispositif pour amener, positionner et souder des pièces d'une carrosserie automobile dans un poste d'usinage d'une chaîne de fabrication, pour lequel, pour amener et positionner des pièces de carrosserie, au moins un cadre de fixation (3) remplaçable est prévu sur chacun des deux côtés de la chaîne de fabrication, chaque cadre de fixation étant disposé de façon à être déplaçable et levable transversalement par rapport à la chaîne de fabrication et au moins un magasin (5) étant prévu pour le stockage des cadres de fixation, où, pour déplacer les cadres de fixation (3) dans une direction parallèle à la chaîne de fabrication, un chariot longitudinal (4), déplaçable le long d'un rail, motorisé, est prévu des deux côtés du poste d'usinage, chariot longitudinal sur lequel au moins deux cadres de fixation, disposés l'un derrière l'autre dans la direction parallèle à celle de la chaîne de fabrication, sont susceptibles d'être supportés et, pour assurer le déplacement des cadres de fixation dans la direction transversale par rapport à la chaîne de fabrication, est respectivement prévu un chariot transmis (9) motorisé, qui est déplaçable, transversalement par rapport à la chaîne de fabrication, et sur lequel un cadre serrage est susceptible d'être supporté, **caractérisé en ce que** les cadres de fixation sont susceptibles d'être supportés, de façon désolidarisable et verrouillable, sur les chariots longitudinaux et/ou transversaux (4, respectivement (9) et **en ce que**, dans la zone du point d'intersection de la direction de déplacement d'un chariot longitudinal (4) et du chariot transversal (9) associé est prévue une position de transfert à laquelle le chariot longitudinal et le chariot transversal sont disposés directement au voisinage l'un de l'autre et, pour assurer le transfert d'un cadre de fixation, du chariot longitudinal au chariot transversal ou inversement, sur le chariot longitudinal, est prévu un moyen de déverrouillage ou de verrouillage et, sur le chariot transversal, un moyen de verrouillage ou de déverrouillage du cadre de fixation.

2. Dispositif selon la revendication 1, **caractérisé en ce que** pour effectuer un verrouillage ou un déverrouillage automatique du cadre de fixation (3) sur le chariot longitudinal (4) ou transversal (9) est prévu un dispositif de commande, au moyen duquel, le déplacement longitudinal du chariot longitudinal et le déplacement transversal du chariot transversal sont commandés en même temps.

3. Dispositif selon la revendication 1 ou 2, **caractérisé en ce que** le moyen permettant de verrouiller ou de déverrouiller le cadre de fixation est formé par des boulons de verrouillage (10) susceptibles d'être actionnés, disposés sur le chariot longitudinal ou le chariot transversal et s'engageant dans des perçages de verrouillage (11) associés du cadre de fixation (3), chaque cadre de fixation présentant au moins deux perçages de verrouillage et chaque fois au moins deux boulons de verrouillage étant prévus sur le chariot longitudinal et le chariot transversal.

4. Dispositif selon la revendication 3, **caractérisé en ce que** les boulons de verrouillage (10) et les perçages de verrouillage (11) sont orientés dans la direction parallèle à la chaîne de fabrication.

5. Dispositif selon l'une des revendications 1 à 4, **caractérisé en ce que** le chariot longitudinal (4) présente sur sa face intérieure, tournée vers le chariot transversal (9), un évidement dans lequel à la position de transfert, un tronçon partiel, tourné vers le chariot longitudinal, du chariot transversal est supporté et guidé.

6. Dispositif selon la revendication 5, **caractérisé en ce que** le moyen associé au chariot longitudinal (4), pour verrouiller ou déverrouiller, est disposé dans la zone de l'évidement du chariot longitudinal, et le moyen associé au chariot transversal, pour verrouiller ou déverrouiller, est disposé sur le tronçon partiel, susceptible d'être supporté dans le chariot longitudinal, du chariot transversal.

7. Dispositif selon l'une des revendications 1 à 6, **caractérisé en ce que** chaque cadre de fixation (3) présente une alimentation en énergie, par exemple pour de l'énergie électrique et hydraulique ou pneumatique, qui est susceptible d'être accouplée au chariot transversal lors du transfert du cadre de fixation, du chariot longitudinal au chariot transversal, par l'intermédiaire d'un raccord, par exemple un raccord multiple.

8. Dispositif selon l'une des revendications 1 à 7, **caractérisé en ce que** le chariot longitudinal (4) est réalisé par deux chariot couplés l'un à l'autre avec des supports respectifs chacun pour un cadre de fixation, un seul chariot étant motorisé.

9. Dispositif selon l'une des revendications précédentes, **caractérisé en ce que** le chariot longitudinal (4) est déplaçable dans la direction de la chaîne de fabrication entre deux positions, précisément une première position, pour laquelle un premier cadre de fixation est à la position de transfert et le deuxième cadre de fixation est en une première position pour opérer le changement de cadre de fixation, et une deuxième position, pour laquelle le premier cadre de fixation est en une deuxième position pour opérer le changement de cadre de fixation et le deuxième cadre de fixation est à la position de transfert, la position de transfert étant disposée à proximité immédiate du poste d'usinage et la première et la deuxième position de changement du cadre de fixation étant disposées devant et derrière le poste d'usinage (1), en observant dans la direction de la chaîne de fabrication.

10. Dispositif selon la revendication 9, **caractérisé en ce que**, dans la zone de la première et/ou de la deuxième position, pour opérer le changement de cadre de fixation, est prévu un magasin (5) pour des cadres de fixation (3), magasin dans lesquels sont prévus des supports (6) prévus pour stocker au moins deux cadres de fixation, et **en ce que** chaque magasin à cadre de fixation présente un dispositif (8) pour lever, déplacer transversalement par rapport à la chaîne de fabrication et pour déposer le cadre de fixation sur des dispositifs supports associés.

11. Dispositif selon la revendication 10, **caractérisé en ce que** le magasin est réalisé sous la forme d'un magasin à étagères en hauteur (5), dans lequel sont prévus au moins deux dispositifs supports (6) disposés l'un au-dessus de l'autre, chacun pour un cadre de fixation (3).

12. Dispositif selon la revendication 11, **caractérisé en ce que** des deux côtés de la chaîne de fabrication sont prévus deux stockages à étagères en hauteur (8), disposés chacun dans la zone de la première et de la deuxième position de changement des cadres de fixation.

13. Dispositif selon la revendication 11 ou 12, **caractérisé en ce que** le dispositif de levage, de déplacement transversalement par rapport à la chaîne de fabrication, et de dépose des cadres de fixation (3) est intégré dans le stockage en hauteur (5), le stockage à étagère en hauteur présentant, sur l'extrémité supérieure, au moins une potence (7) orienté transversalement par rapport à la chaîne de fabrication, sur laquelle est monté un dispositif de levage (8), par exemple un dispositif de levage à sangle, pour les cadres de fixation.

14. Dispositif selon la revendication 13, **caractérisé en ce que**
le dispositif (8) de levage présente un mandrin qui comporte, sur chacun des deux côtés, un moyen de support d'un cadre de fixation, par exemple un crochet susceptible de s'introduire par pivotement dans le cadre de fixation.

15. Dispositif selon la revendication 13 ou 14, **caractérisé en ce que** le dispositif (8) de levage, de déplacement transversal par rapport à la chaîne de fabrication, et de dépose des cadres de fixation pour chaque point de stockage d'un cadre de fixation présente un cadre motorisé, déplaçable transversalement par rapport à la chaîne de fabrication, sur lequel sont prévus les supports des cadres de fixation.

16. Dispositif selon l'une des revendications précédentes, **caractérisé en ce que** dans le poste d'usinage (1) est prévue une position de travail pour le cadre de fixation, position à laquelle le cadre de fixation est orienté exactement envers le poste d'usinage et est ancré à celui-ci.

17. Dispositif selon la revendication 16, **caractérisé en ce que**, dans la zone de la position de travail du cadre de fixation (3) est prévu un moyen de décharge du poids du cadre de fixation, en fonction de son poids.

18. Dispositif selon la revendication 7, **caractérisé en ce que** le moyen de décharge du poids est intégré dans le chariot transversal (9) et est commandé par l'unité de commande du chariot transversal, en fonction du poids prédéterminé du cadre de fixation réel.

19. Dispositif selon la revendication 17, **caractérisé en ce que** le moyen de décharge du poids est réalisé sous la forme d'un tronçon de palier et de guidage du chariot transversal (9) dans la zone de position de travail.

20. Dispositif selon l'une des revendications 1 à 19, **caractérisé en ce qu'**un élément, disposé dans la zone de la position de travail du cadre de fixation (3), de la cellule de soudage (1) comprenant au moins par tronçon également le guidage du chariot transversal (9), est disposé de façon à pouvoir pivoter autour d'un axe (A), orienté horizontalement et parallèlement à la direction de la fabrication, afin d'incliner le cadre de fixation de sa position de travail en une position inclinée vers l'extérieur, afin de supporter des pièces de carrosserie.

21. Dispositif selon la revendication 20, **caractérisé en ce que** l'élément, susceptible de pivoter, de la cellule de soudage (1) s'étend de la position de travail jusqu'au rail du chariot longitudinal, le transfert d'un cadre de fixation du chariot transversal au chariot longitudinal se faisant à la position inclinée.

22. Dispositif selon la revendication 20 ou 21, **caractérisé en ce qu'**à l'élément susceptible de pivoter est associé un entraînement, en particulier un entraînement par manivelle (18), commandé par l'unité de commande.
